# EUROPÄISCHE PATENTSCHRIFT

(11) **EP 2 807 613 B1**
(45) Veröffentlichungstag und Bekanntmachung des Hinweises auf die Patenterteilung: **14.03.2018**
(21) Anmeldenummer: 13701568.1
(22) Anmeldetag: 16.01.2013
(51) Int. Cl.: G06K 19/077

(54) **VERFAHREN ZUM HERSTELLEN EINES DATENTRÄGERS UNTER VERMEIDUNG VON MECHANISCHEN SPANNUNGEN ZWISCHEN CHIP UND DATENTRÄGERKÖRPER**
METHOD FOR PRODUCING A DATA CARRIER THAT PREVENTS MECHANICAL STRAINS BETWEEN CHIP AND DATA CARRIER BODY
PROCÉDÉ DE PRODUCTION D'UN SUPPORT DE DONNÉES, PERMETTANT D'ÉVITER DES CONTRAINTES MÉCANIQUES ENTRE UNE PUCE ET LE CORPS DE SUPPORT DE DONNÉES

(30) Priorität: 24.01.2012 DE 102012001346
(43) Veröffentlichungstag der Anmeldung: 03.12.2014
(73) Patentinhaber: Giesecke+Devrient Mobile Security GmbH, 81677 München (DE)
(72) Erfinder: PONIKWAR, Walter, 84489 Burghausen (DE); TARANTINO, Thomas, 83410 Laufen (DE); SALZER, Tobias, 82008 Unterhaching (DE); BRAUN, Andreas, 80798 München (DE); ENDRES, Günter, 81547 München (DE)
(86) Internationale Anmeldenummer: PCT/EP2013/000135
(87) Internationale Veröffentlichungsnummer: WO 2013/110444

(56) Entgegenhaltungen:
- WO-A2-2011/039327
- US-A- 5 013 900

## Beschreibung

Die Erfindung betrifft ein Verfahren zum Herstellen eines Datenträgers, eines Inlays für einen Datenträgers, sowie einen Datenträger selbst. Insbesondere betrifft die Erfindung ein Verfahren zur Herstellung eines kontaktlos auslesbaren Datenträgers mit integriertem IC, das als Chipkarte, Identifikationsdokument, Ausweis oder als Datenseite in einem Passbuch nutzbar ist. Bei einem Datenträger handelt es sich grundsätzlich um ein in Baugröße und Ressourcenumfang reduzierten Computer, der einen Mikrocontroller und mindestens eine Schnittstelle zur Kommunikation mit einem externen Gerät aufweist. Häufig besitzt er keine oder nur eine rudimentäre eigene Nutzerdatenausgabe. Seine äußere Bauform ist so gestaltet, dass er von einem Benutzer leicht zu jeder Zeit mitgeführt werden kann. Vorzugsweise ist ein Datenträger mit entsprechenden Sicherheitsfunktionalitäten ausgestattet, beispielsweise in Form einer Smart Card, Chipkarte, Massenspeicherkarte, Multimediakarte. Beispielsweise eine Bezahlkarte, wie Kredit-oder Debitkarten werden unter dem hier beschriebenen Datenträger gefasst. Alternativ handelt es sich um ein elektronisches Identitätsdokumente, wie beispielsweise einem elektronischen Personalausweis, einem Reisepass mit, auf einem Chip gespeicherten maschinenlesbaren Identifikationsdaten einer Person. Tragbare Datenträger weisen inzwischen vermehrt eine kontaktlose Schnittstelle auf. Das Betriebssystem der Chipkarte ist dabei so ausgelegt, dass die kontaktlose Schnittstelle beispielsweise gemäß einer der in den Standards ISO/ IEC 14443,15693 oder 18092 beschriebenen Protokolle Daten austauschen kann. Zusätzlich kann weiterhin ein kontaktbehaftetes Interface beispielsweise gemäß ISO/IEC 7816 parallel bedient werden. Dazu werden die Datenträger mit Transponderanordnungen versehen, die aus einem Chip und einer damit verbundenen Nahfeldkommunikationsantenne bestehen. Zur Vereinfachung wird im Folgenden der Begriff Spule anstelle Nahfeldkommunikationsantenne verwendet. Diese Chip-Spulen-Anordnungen erlauben es, in dem IC gespeicherte Daten kontaktlos auszulesen und/oder Daten kontaktlos einzuschreiben. Die Herstellung solcher Datenträger erfolgt typischerweise durch Laminieren von zumindest einer Kern- und zwei Deckschichten, wobei in die Kernschicht die Chip-Spulen-Anordnung integriert wird. Derartige Aufbauten werden auch als Inlay bezeichnet.

Ein Problem in Bezug auf die Dauerbeständigkeit solcher Datenträger bildet der Verbund zwischen dem Chip und dem Datenträgerkörper. Beide bestehen aus unterschiedlichen Materialien, wobei der Chip hart und hochschmelzend ist, während das für den Datenträgerkörper verwendete Material vergleichsweise weich und gut laminierbar ist. Die unterschiedliche Materialbeschaffenheit von Chip und Datenträgerkörper führt bei langfristiger Nutzung bisweilen dazu, dass sich ausgehend von dem Grenzbereich zwischen Chip und Datenträgerkörper in den angrenzenden Schichten Risse bilden.

Eine Ursache für die Rissbildung findet sich in der mechanischen Beanspruchung der Datenträger, wodurch die im Datenträgerkörper eingefrorenen mechanischen Spannungen freigesetzt werden. Die mechanischen Spannungen können beispielsweise während des Laminierens in den Datenträgerkörper eingebracht worden sein. Insbesondere erfolgt eine Rissbildung oder auch ein Brechen einer Schicht des Datenträgerkörpers, beispielsweise einer Folienschicht. Diese Risse können sich in die nächstliegende Folienschicht fortpflanzen. Durch die Risse werden insbesondere die elektrische Funktionalität, das Erscheinungsbild, die Robustheit gegenüber äußeren Umwelteinflüssen und auch die mechanische Stabilität des Datenträgers beeinträchtigt. In extremen Fällen ist die elektrische Funktionalität des Datenträgers, insbesondere das kontaktlose Auslesen/Einbringen von Daten aus/in den IC des Datenträgers nicht mehr möglich.

Aus der G&D Schrift DE 4040770 A1 ist bekannt, ein Trägerband mit Chips mit einem thermoplastischen Schicht zu überziehen. Bei Platzieren des Chips in den Kartenkörper wird mittels Druck/Wärme der Kleber aktiviert und sorgt für eine stressfreie Verbindung von Chip und Kartenkörper.

Aus der WO 2009/135823 A1 ist ein Aufbau für einen mehrschichtigen Körper eines Datenträgerkörpers entnehmbar, bei dem einzelne Schichten Einlagen aus einem weicheren Plastikmaterial enthalten. Ein in den Datenträgerkörper zu integrierendes Chip wird nun genau in einem solchen Flicken von weicherem Plastikmaterial angeordnet. Die Ausdehnung des Flickens ist dabei größer als der Chip. Während des Laminierens erweicht dieses Plastikmaterial, wodurch es um das Modul herum angeordnet wird. Auf diese Weise können Stresszonen, die zu Rissen führen vermieden werden. Die Realisierung der patchworkartigen Schichten ist jedoch aufwendig, das Plastikmaterial zudem nur schwer positionierbar.

In der DE 10 2010 025 774 A1 wird vor dem Einsetzen des Chipmoduls in den Kartenschichtenaufbau ein Chip mit einem Haftmittel benetzt und im Kartenkörper platziert. Dadurch werden laminierunfreundliche Komponenten während des Laminierens verbindbar gemacht, ohne dass Mikrorisse entstehen können. Das Chipmodul wird vor dem Platzieren im Kartenkörper behandelt, um eine gute Haftverbindung zwischen Chipmodul und Datenträgerkörper erhalten zu können.

In der DE 10 2009 050 753 A1 wird Herstellungsverfahren für Datenträger beschrieben, bei dem ein Chipmodul auf einem Trägersubstrat angeordnet ist. Mittels entsprechender Formgebung wird ein flüssiger UV-Kleber zum Ausgestalten einer Zwischenschicht verwendet. Anschließend wird eine Deckschicht aufgebracht. Anschließend wird der UV-Kleber mittels UV-Strahlung ausgehärtet, der Datenträger vereinzelt und anschließend laminiert.

In dem Buch "Vom Plastik zur Chipkarte" von Y. Haghiri, T. Tarantino, Carl Hanser Verlag München, 1999, werden Herstellungsverfahren für Chipkar-US 5 013 900 beschreibt eine mehrschichtige Ausweiskarte, die in einem Hohlraum einen IC-Baustein enthält. Der Hohlraum wird vor dem Laminieren des Kartenverbundes unter Anwendung von Druck und Wärme mit einem flüssig bis pastös eingestellten Polymer gefüllt. Beim Laminieren füllt das Polymer, unterstützt durch die Druckeinwirkung den Hohlraum um den IC-Baustein völlig aus. Bei der fertigen Karte ist das Polymer zu einer festen, gummiartigen Masse vernetzt, die den IC-Baustein im Kartenhohlraum schützt.

WO 2011 / 039 327 beschreibt ein Verfahren zur Herstellung eines funktionellen Laminats, wobei das Verfahren die Schritte umfasst, mindestens eine thermoplastische Kunststofffolie als Substratschicht bereitzustellen, mindestens einen Durchbruch in der Substratschicht zu erzeugen, mindestens eine funktionelle Komponente in den Durchbruch einzubringen, die Substratschicht mit mindestens einer weiteren Kunststofffolie als Deckschicht unter Druck und Zuführung von Wärme zu laminieren. Ein weiches, elastisches und temperaturbeständiges Einbettungsmaterial wird so angeordnet, dass die funktionelle Komponente zumindest in der Substratschicht vom Einbettungsmaterial umgeben ist, das einen Wärmeausdehnungskoeffizienten aufweist, der mindestens so groß wie ein Wärmeausdehnungskoeffizient des Materials der Substratschicht ist, wobei das Einbettungsmaterial und das Material der Substratschicht ein ähnliches oder gleiches Schrumpfverhalten bei Erwärmung aufweisen. Problematisch bei all diesen Vorschlägen ist, dass die während des Laminierens eingebrachten mechanischen Spannungen zwischen Chip, elektronischen Komponenten und Datenträgerkörper nicht ausreichend kompensiert werden können, da Kleber und Chip bereits vor dem Laminieren eine mechanische Einheit bilden. Dies führt während des Laminierens zu mechanischen Spannungen im Datenträger. Diese Spannungen führen bei bestimmungsgemäßer Verwendung des Datenträgers zu den beschriebenen Rissbildungen.

Der Erfindung liegt daher die Aufgabe zugrunde, ein Verfahren anzugeben, das es ohne wesentliche Eingriffe in den Laminierprozess erlaubt rissfeste Datenträger herzustellen. Insbesondere sollen mechanische Spannungen vermieden werden, die während eines Laminierprozesses im Datenträgerkörper entstehen und im alltäglichen Gebrauch zu Rissbildungen führen können. Trotzdem soll der Chip mechanische stabil im Datenträgerkörper eingebracht sein. Dabei soll das Herstellungsverfahren nicht wesentlich komplexer oder kostenintensiver sein, eine Massenfertigung der Datenträger wird insbesondere angestrebt.

Die Aufgabe der Erfindung wird gemäß Anspruch 1 gelöst. Vorteilhafte Ausgestaltungen sind in den abhängigen Ansprüchen beschrieben. Das erfindungsgemäße Stabilisierungsmittel bewirkt, dass der Chip während des Laminierungsvorgangs flexibel im Datenträgerkörper integriert ist. Insbesondere wird das Stabilisierungsmittel vor dem Laminieren nicht aktiviert, wobei vor dem Laminierschritt keine feste Verbindung zwischen Chip und sowohl den Seitenwänden der Aussparung als auch der Deckschicht besteht. Somit kann sich das Stabilisierungsmittel über Chip und Anschlussstellen für die Spulenkontakte vor und während des Laminierprozesses flexibel verteilen. In einer bevorzugten Ausgestaltung ummantelt das Stabilisierungsmittel den Chip. Während des Laminierens bleibt der Chip flexibel in dem Datenträgerkörper, sodass beim Verbinden der einzelnen Schichtenfolgen durch das Laminieren keine mechanischen Spannungen zwischen Chip, Spule und/ oder Datenträgerkörper entstehen können, die im Datenträgerkörper eingefroren bleiben.

Zum Ende des Laminierprozesses oder bevorzugt nach Abschluss des Laminierprozesses wird das Stabilisierungsmittel aktiviert. Durch das Aktivieren wird das Stabilisierungsmittel aus seinem flexiblen Materialzustand in einen elastischen Materialzustand gebracht. Aus diesem Grund ist das Stabilisierungsmittel vor und während des Laminierens flexibel.. Nach dem Laminieren besteht eine ausreichende Haftverbindung zwischen Datenträgerkörper und Chip ohne dass mechanische Spannungen in dieser Verbindung vorhanden sind.

In einer Ausgestaltung kann das Stabilisierungsmittel vorher mit den Oberflächen von Chip und Datenträgerkörper vernetzen, unter der Bedingung, dass das Stabilisierungsmittel nach dem Laminieren elastisch bleibt. Insbesondere verpresst sich das Stabilisierungsmittel um den Chip und/ oder fließt um den Chip herum.

Ein Chip ist erfindungsgemäß ein integrierter Halbleiterchip, der mittels einer Vergussmasse ummantelt ist. Der Begriff Chip umfasst einerseits ein separates Chipmodul mit eigenem Träger und ggf. Kontaktflächen auf einer Oberseite des Trägers, um den Chip auch kontaktbehaftet betreiben zu können. Andererseits wird der Chip gemäß der Flip-Chip-Technologie in den Datenträgerkörper eingebracht, wobei der Chip insbesondere Kontaktanschlüsse für die Spule aufweist.

Insbesondere wird das Stabilisierungsmittel oberhalb des Chips appliziert. Durch Bedecken des resultierenden Datenträgerkörpers mit einer Deckschicht verteilt sich das Stabilisierungsmittel bereits in der Aussparung und füllt somit auch Randbereiche zwischen Aussparung und Chip aus. Resultat ist eine gute Ummantelung des Chips mit dem Stabilisierungsmittel. Das Stabilisierungsmittel wird beispielsweise punktförmig auf dem Chip angeordnet und/ oder um den Chip in der Aussparung angeordnet. Während des Laminierens wird das Stabilisierungsmittel um den Chip herum verpresst. Das Stabilisierungsmittel weist insbesondere eine Viskosität auf, die es ermöglicht, es um den Chip herum zu applizieren. Die Viskosität ist in diesem Fall ein vom Verarbeitungsschritt entsprechend einstellbarer Parameter.

In einer alternativen Ausgestaltung wird das Stabilisierungsmittel nach dem Laminierprozess aktiviert. Das Stabilisierungsmittel wird bevorzugt durch Strahlung aktiviert.

In einer bevorzugten Ausgestaltung wird eine Ultra-Violett-, kurz UV-Strahlung zum Aktivieren des Stabilisierungsmittels verwendet. In diesem Fall ist das Stabilisierungsmittel eine UV-härtende Vergussmasse, eine UVnachvernetzbare Hot-Melt Vergussmasse und/ oder ein UV-Haftkleber. Durch ein Stabilisierungsmittel auf UV Basis ist eine einfache Applizierung des Stabilisierungsmittels auf dem Chip gegeben und das Stabilisierungsmittel bleibt während des Laminierens flexibel. Weiterhin reagieren Stabilisierungsmittel auf UV-Basis sehr schnell, sodass das Aktivieren des Stabilisierungsmittels in einer kurzen Zeitspanne abgeschlossen ist.

In einer alternativen Ausgestaltung ist das Stabilisierungsmittel ein wasserbasierter Lack oder Haftkleber. Diese sind bevorzugt weich bzw. flexibel eingestellt und trocknen auf konventionelle Art. Das bedeutet, dass derartige Stabilisierungsmittel insbesondere bei Raumtemperatur, geringer Wärmezufuhr und/ oder gänzlich ohne Wärmezufuhr aktivierbar sind. Dadurch bleiben derartige Stabilisierungsmittel während des Laminierprozesses flexibel und lassen sich darüber hinaus gut auf dem Chip applizieren. Ein technischer Mehraufwand, insbesondere aufwendige oder komplexe Applizierapparaturen sind dadurch nicht erforderlich.

In einer alternativen Ausgestaltung ist das Stabilisierungsmittel ein lösungsmittelbasierter Lack oder Haftkleber. Diese sind bevorzugt weich bzw. flexibel eingestellt und trocknen ebenfalls wie wasserbasierte Stabilisierungsmittel auf konventionelle Art. Dadurch sind derartige Stabilisierungsmittel während des Laminierprozesses flexibel und lassen sich gut auf dem Chip applizieren. Ein technischer Mehraufwand, insbesondere aufwendige oder komplexe Applizierapparaturen sind dadurch nicht erforderlich.

In einer alternativen Ausgestaltung ist das Stabilisierungsmittel ein Ein- oder Mehrkomponentensystem. Dabei kann eine Komponente auf der Deckschicht passergenau oberhalb des eingebrachten Chips angeordnet sein und eine zweite Komponente direkt auf dem Chip appliziert werden. Bei Kontaktierung beider Komponenten vermischen sich beide Komponenten, wodurch die Haftklebefunktion gestartet wird. Da der Laminierprozess beendet ist, bevor das Mehrkomponentensystem vollständig ausgehärtet ist, werden keine mechanischen Spannungen durch das Laminieren erzeugt.

In einer alternativen Ausgestaltung ist das Stabilisierungsmittel ein sogenanntes Hot-Melt-Mittel, welches bei Raumtemperatur einen festen Materialzustand aufweist und durch thermische Strahlung verarbeitbar wird. Vor dem Abkühlen wird der Laminierprozess durchgeführt, sodass diese Art der Stabilisierungsmittel während des Laminierens flexibel bleiben und mechanische Spannungen nicht entstehen können. Unmittelbar nach dem Abkühlen und Erstarren des Hot-Melt-Mittels ist eine feste Verbindung vorhanden. Weiterer Vorteil ist, dass derartige Stabilisierungsmittel lösungsmittelfrei sind und beim Aktivieren nicht ausgast.

In einer bevorzugten Ausgestaltung ist der Datenträgerkörper zumindest aus einer Trägerschicht und einer Kernschicht aufgebaut.

Die Kernschicht weist eine Aussparung auf, in die der Chip eingebracht wird. Die Kernschicht wird auch als Spacerschicht bezeichnet. Insbesondere ist die Kernschicht minimal höher als das Chip auf der Trägerschicht, sodass das Stabilisierungsmittel oberhalb des Chips mit der Deckschicht kontaktiert werden kann.

Die Trägerschicht ist bevorzugt mit einer Nahfeldspule ausgestattet. Diese Spule oder auch Antenne ist entweder direkt auf die Trägerschicht gedruckt oder in Form von Drahtwicklungen oberhalb der Trägerschicht angeordnet und wird beim Laminieren zwischen Trägerschicht und Kernschicht eingebettet. Der Chip wird bei Einbringen auf die Trägerschicht mit der Nahfeldantenne elektrisch leitend verbunden. Insbesondere diese Verbindung ist beim Laminieren keinen mechanischen Spannungen ausgesetzt.

Der Chip wird dabei ggf. mittels eines Haftmittels fixiert. Der Haftkleber wird auf der Trägerschicht vor dem Aufbringen des Chips aufdosiert. Dadurch wird der Chip im Datenträgerkörper fixiert, um weitere Verarbeitungsschritte, insbesondere Aufbringen der Deckschicht und Laminieren durchführen zu können, ohne die elektrische Verbindung zur Nahfeldantenne zu zerstören.

In einer alternativen Ausgestaltung ist das Stabilisierungsmittel auf der Deckschicht angeordnet ist und wird während des Aufbringens der Deckschicht auf die Kernschicht passergenau in die Aussparung appliziert. Dies ermöglicht ein vereinfachtes Rolle-zu-Rolle Herstellungsverfahren und beschleunigt den Herstellungsprozess.

In einer bevorzugten Ausgestaltung wird das Stabilisierungsmittel mittels einer Dosiereinheit appliziert. Diese Dosiereinheit beinhaltet das flexible Stabilisierungsmittel, um es auf dem Chip applizieren zu können. Derartige Dosiereinheiten können in kurzer Zeit das Stabilisierungsmittel applizieren, sodass diese für eine schnelle Massenfertigung mit örtlich exakter und mengentechnisch exakter Applizierung geeignet sind.
In einer alternativen Ausgestaltung wird das Stabilisierungsmittel drucktechnisch appliziert. Insbesondere ist ein Siebdruckverfahren anzuwenden, was zu einer örtlich genauen und schnellen Applizierung führt.
In einer Ausgestaltung bilden Datenträgerkörper und Deckschicht den fertigen Datenträger mit einer standardisierten Dicke sowie ggf. einem Designdruck und einer optischen Personalisierung des Datenträgers.

In einer Weiterbildung der Erfindung bilden die Trägerschicht, die Kernschicht und die Deckschicht ein Inlay für einen Datenträger, insbesondere ein Inlay für ein Identifikationsdokument mit berührungsloser Datenübertragung. Auf dieses Inlay werden beidseitig weitere Overlayschichten aufgebracht, wodurch eine Standardisierte Dicke des Datenträgers sowie ein Designdruck und eine optische Personalisierung des Datenträgers realisiert werden.

Im Erfindungsgrundgedanken ist weiterhin ein Datenträgerkörper bestehend aus einer Trägerschicht, einer Kernschicht und mindestens einer Deckschicht, wobei die Kernschicht eine Aussparung aufweist, in die ein Chip angeordnet ist; Trägerschicht, Kernschicht und Deckschicht durch Laminieren miteinander verbunden sind und innerhalb der Aussparung ein Stabilisierungsmittel angeordnet ist, welches den Chip vor dem Laminieren oberseitig bedeckt.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
Figur 1 einen Datenträger in Draufsicht mit eingebrachter Nahfeldantenne gemäß Stand der Technik
Figur 2 den Datenträger gemäß Figur 1 im Querschnitt gemäß Schnittlinie A-A'
Figur 3a-b eine mechanische Beanspruchung eines Datenträgers mit entstehenden Mikrorissen
Figur 4a-e einen erfindungsgemäßen Datenträger in den einzelnen Herstellungsschritten
Figur 5a-e einen erfindungsgemäßen Datenträger in zu Figur 4 alternativen Herstellungsschritten
Figur 6a-e einen erfindungsgemäßen Datenträger in zu Figur 4 und 5 alternativen Herstellungsschritten
Figur 7 einen zu den Figuren 4 bis 6 alternativen Datenträger
Figur 8a-d einen zu Figur 4 alternativen erfindungsgemäßen Datenträger in den einzelnen Herstellungsschritten

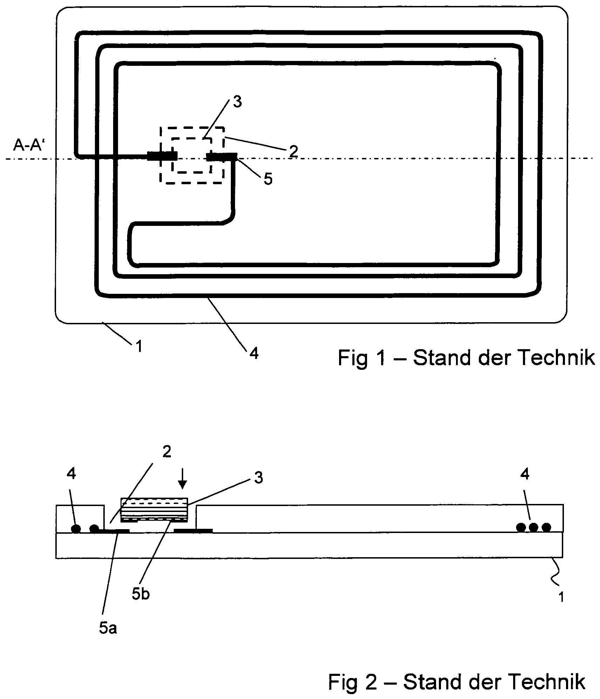

Figur 1 zeigt einen Datenträger 1 in Draufsicht mit eingebrachter Nahfeldantenne gemäß heutigem Stand der Technik. Dabei ist in den Datenträgerkörper 6 eine Aussparung 2 eingebracht. Diese Aussparung 2 ist auf unterschiedliche Weise herstellbar beispielsweise durch schichtweises Aufbauen des Datenträgerkörpers 6 mit einer entsprechenden Aussparung 2 in einer der Schichten. In die Aussparung 2 wird ein Chip 3 eingebracht. Der Chip 3 ist entweder ein auf einem Substrat mit Kontaktfeldern angeordneter integrierter Halbleiterchip, der derart in den Datenträgerkörper 6 eingebracht wird, dass eine Kontaktierung des Chips mittels eines externen Endgeräts möglich ist. Alternativ ist der Chip ein umgossener Halbleiterchip, der in die Aussparung 2 eingebracht wird, um dort mit Kontaktierungsstellen 5 des Datenträgerkörpers 6 elektrisch leitend verbunden zu werden. Die Kontaktierungsstellen 5 wiederum sind mit einer, im Datenträgerkörper 6 angeordneten Nahfeldantenne 4, im Folgenden als Spule 4 bezeichnet, verbunden.

Derartige Datenträger werden vielseitig eingesetzt und insbesondere für ein berührungsloses Auslesen und Einbringen von Daten auf/vom Halbleiterchip verwendet. Insbesondere werden derartige Aufbauten für Kredit- oder Debitkarten, sowie elektronische Identitätsdokumente wie elektronischer Pass und elektronischer Personalausweis verwendet.

In Figur 2 ist ein gemäß einer Schnittlinie A-A' der Figur 1 gezeigter Querschnitt eines Datenträgers 1 skizziert. Zu erkennen ist, dass der Datenträgerkörper 6 aus einer Schichtenfolge aufgebaut ist. Die Spule 4 ist auf einer Trägerschicht 61 des Datenträgerkörpers 6 aufgebracht. Der Datenträgerkörper 6 weist im Randbereich seiner Aussparung 2 Spulenanschlusskontakte 5a auf. Diese Spulenanschlusskontakte 5a werden mit jeweiligen Spulenanschlusskontakten 5b des Chips 3 elektrisch leitend verbunden, wenn der Chip 3 in die Aussparung 2 eingebracht wird. Um eine elektrische Leitfähigkeit zwischen Chip 3 und den Anschlüssen 5a herzustellen, sind vielfältige Möglichkeiten bekannt, insbesondere Solder Bumps, Leitpaste, leitfähiges Kunststoffsubstrat und der gleichen mehr. Der Chip 3 wird mittels Chipkleber 7 mit dem Datenträgerkörper 6 verbunden.

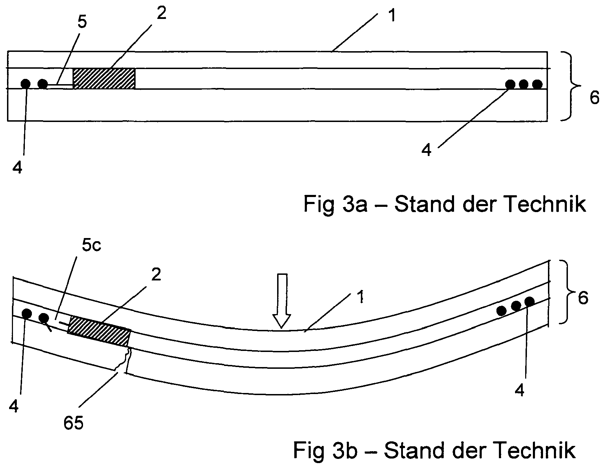

In der Figur 3 ist dargestellt, wie ein Datenträger 1 der Figuren 1 und 2 aufgrund mechanischer Beanspruchung durch Verbiegen seine elektrische Funktionalität durch Bruch 5c der elektrischen Verbindung verlieren kann und/ oder Mikrorisse 65 im Datenträgerkörper 6 zu mechanischer Instabilität bzw. zu fehlendem Schutz vor äußeren Umwelteinflüssen führen können. Diese Rissbildung ist daher unbedingt zu vermeiden.

Der Datenträger 1 der Figuren 3a-b ist nicht mit einem erfindungsgemäßen Stabilisierungsmittel 8 ausgestattet. Der Chip 3 wird mittels Chipkleber 7 auf einer Kernschicht 62 platziert. Oberhalb und unterhalb der Kernschicht 62 wird eine Deckschicht 63 appliziert. Die erhaltene Schichtfolge wird mittels einer Laminiervorrichtung miteinander verbunden. Im Datenträger gemäß Figuren 3a-b ist der eingebettete Chip 3 bereits vor dem Laminieren unflexibel mit dem Datenträgerkörper 6 verbunden. Beim Laminieren wird die Schichtenfolge zwischen zwei heiße Laminierbleche gelegt. Die Laminierbleche verringern ihren Abstand, wodurch die einzelnen Folienschichten aufgeweicht und miteinander verbunden werden. Da der Chip als unflexibles Element im Kartenkörper 6 eingebracht ist, werden durch das Aufweichen der Folienschichten mechanische Spannungen im Datenträgerkörper 6 erzeugt. Beim Abkühlen des Datenträgers bleiben diese mechanischen Spannungen in dem Datenträgerkörper 6 erhalten oder werden ggf. sogar noch verstärkt. Umgangssprachlich wird vom Einfrieren der mechanischen Spannungen gesprochen. Kommt es auf Grund alltäglicher Belastungen des Datenträgers 1 zu relativen Biegebewegungen des Datenträgerkörpers 6 werden die mechanischen Spannungen weiter gesteigert, bis die wirkenden Kräfte für den Datenträgerkörper 6 zu groß sind. In der Folge kommt es zu einem Bruch 5c einer der elektrischen Verbindungen zwischen Spule 4 und Chip 3, wie in Figur 3b gezeigt. Anschließend kann der Chip 3 im Datenträger 1 nicht mehr ausgelesen werden.

Eine alternative Folge derartiger Spannungen kann sein, dass eine Folienschicht aufgrund der geringen Dicke, einen Mikroriss 65 erfährt, wie in Figur 3b dargestellt. Diese Mikrorisse können sich sogar auf benachbarte Folien übertragen. Diese Mikrorisse 65 verringern die mechanische Stabilität des Datenträgers 1. Zusätzlich verliert der Datenträger 1 durch diese Mikrorisse 65 seine Widerstandsfähigkeit gegenüber Umwelteinflüsse, wie Feuchtigkeit, Schmutz und auch Chemikalien. Derartige Mikrorisse können als lokale Haarrisse oder auch als Teilung kompletter Folienschichten auftreten und sind unbedingt zu vermeiden.

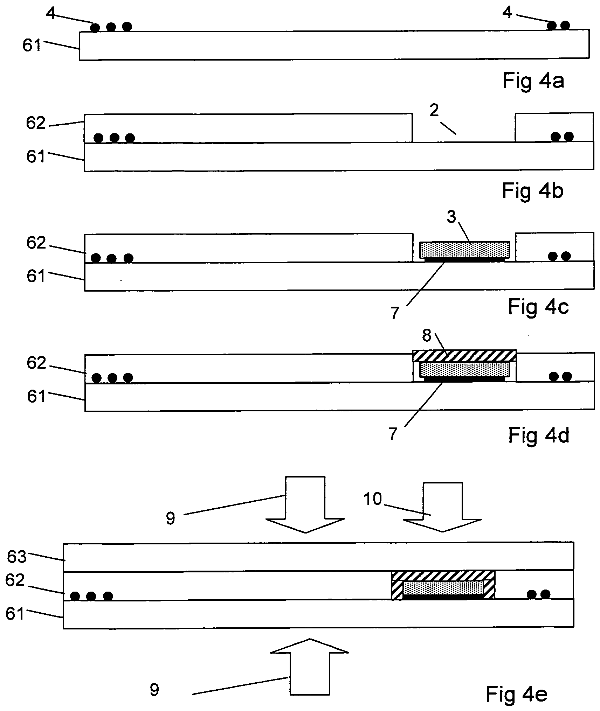

In Figuren 4 bis 8 sind daher Datenträger 1 anhand alternativer Herstellungsschritte dargestellt, bei dem ein erfindungsgemäßes Stabilisierungsmittel 8 eingebracht ist. Der Aufbau der Datenträger 1 erfolgt vorrangig in Schichten 61 bis 64, wobei die einzelnen Schichten 61 bis 64 aus Folienmaterial, insbesondere PC, hergestellt sind. Vorrangig sind dieses Verfahren für einen Massenfertigung vorgesehen, sodass die Folienschichten 61 bis 64 entweder als Endlosmaterial im Rolle-zu-Rolle Verfahren bereitgestellt und bearbeitet werden oder in Form von Folienbögen bereitgestellt werden, aus denen jeweils die einzelnen Datenträger 1 nach dem Laminieren vereinzelt werden.

Zunächst wird das Herstellungsverfahren gemäß Figuren 4a-e beschrieben. Gemäß Figur 4a wird eine Trägerschicht 61 bereitgestellt. Diese Trägerschicht 61weist bereits eine Spule 4 auf, die entweder in Form eines Spulendrucks aufgedruckt wurde, gemäß eines Aufdampfprozesses aufgebracht wurde oder als Drahtwicklung oberhalb der Trägerschicht 61 aufgebracht wurde. Oberhalb der Trägerschicht 61 auf der Seite der Spule 4 wird eine Kernschicht 62 angeordnet. Diese Kernschicht 62 wird auch als Spacerschicht oder Spacerfolie 62 bezeichnet. Die Kernschicht 62 weist eine Aussparung 2 auf. Die Aussparung 2 ist im einfachsten Fall ein Fenster in der Folie 62. Gemäß Figur 4c wird nun ein Chip 3 in die Aussparung 2 eingebracht. Dazu wird ggf. bereits ein Chipkleber 7 verwendet, um den Chip im Aufbau fixieren zu können. Durch das Einbringen des Chips 3 in die Aussparung 2 wird eine elektrisch leitfähige Verbindung 5 zu der Spule 4 hergestellt. Erfindungsgemäß wird nun ein Stabilisierungsmittel 8 oberhalb des Chips 3 appliziert. Das Applizieren erfolgt mittels einer nicht dargestellten Dosiereinheit oder alternativ in einem Siebdruckschritt. Die Kernfolie 62 weist eine höhere Dicke als der Chip 3 auf, sodass sowohl Chipkleber 7 als auch Stabilisierungsmittel 8 in der Aussparung 2 eingebracht werden können. Das Stabilisierungsmittel 8 weist eine derartige Viskosität auf, sodass der Chip 3 auch an den Seitenflächen vom Stabilisierungsmittel benetzt wird. Insbesondere ist das Stabilisierungsmittel flexibel und härtet nicht vor dem Laminieren aus.

Gemäß Figur 4e wird nun eine Deckschicht 63 auf die Kernschicht 62 angeordnet und der erhaltene Schichtaufbau 61 bis 63 wird laminiert, was durch die Pfeile 9 dargestellt ist. Erst in einem Folgeschritt wird nun das Stabilisierungsmittel aktiviert, was durch den Pfeil 10 dargestellt ist. Durch die Beschaffenheit des Stabilisierungsmittels 8 wird erreicht, dass der Chip ummantelt wird. Mechanischer Stress, der während des Laminierens 9 aufgebaut wird, wird von dem Stabilisierungsmittel 8 absorbiert, sodass in den Datenträgerkörper 6, insbesondere in die einzelnen Folienschichten 61, 62, 63 keine Spannungen eingefroren werden, sodass der Datenträgerkörper 6 nach dem Laminieren keine mechanischen Spannungen aufweist.

Alternativ zum Schritt 10 vernetzt das Stabilisierungsmittel 8 beim Einbringen in die Aussparung 2 mit dem Chip und den Schichten 61, 62 und 63. Dazu wird das Stabilisierungsmittel 8 punktförmig oberhalb des Chips 3 appliziert und durch Aufbringen der Deckschicht 63 in der Aussparung 2 verteilt. Durch das Laminieren wird das Stabilisierungsmittel 8 weiter in der Aussparung verpresst. Das Stabilisierungsmittel 8 bleibt dabei auch nach dem Laminieren 10 elastisch und kompensiert die während des Laminierens 10 auftretenden mechanischen Spannungen.

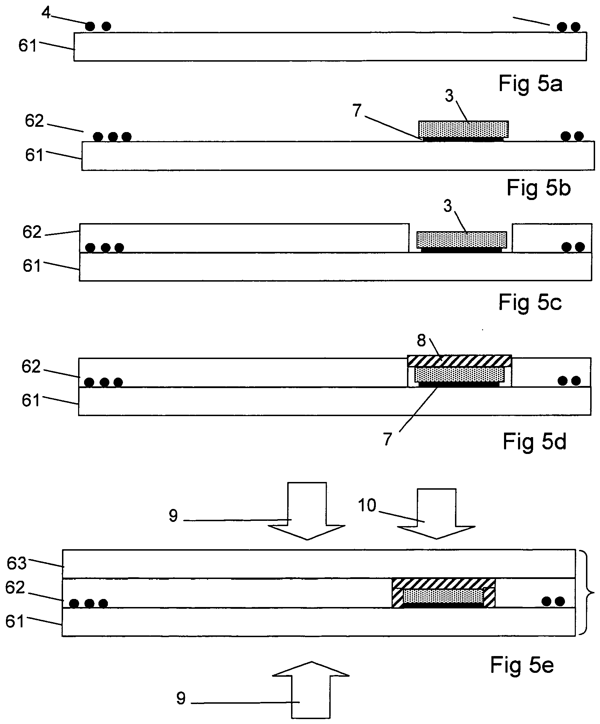

In Figur 5a bis 5e ist ein modifiziertes Herstellungsverfahren dargestellt, wobei hier nur auf die wesentlichen Unterschiede eingegangen wird. Im Unterschied zu Figur 4b wird in Figur 5b zunächst der Chip auf der Trägerschicht 61 angeordnet und elektrisch mit der Spule 4 kontaktiert. Anschließend wird die Kernfolie 62 mit der Aussparung 2 auf die Trägerschicht 61 angeordnet, wobei das Chip 3 in der Aussparung 2 eingebracht wird. Die Aussparung 2 ist im einfachsten Fall ein Fenster in der Folie 62. Die folgenden Schritte gemäß Figuren 5d und 5e sind identisch mit den Schritten aus Figur 4d und 4e.

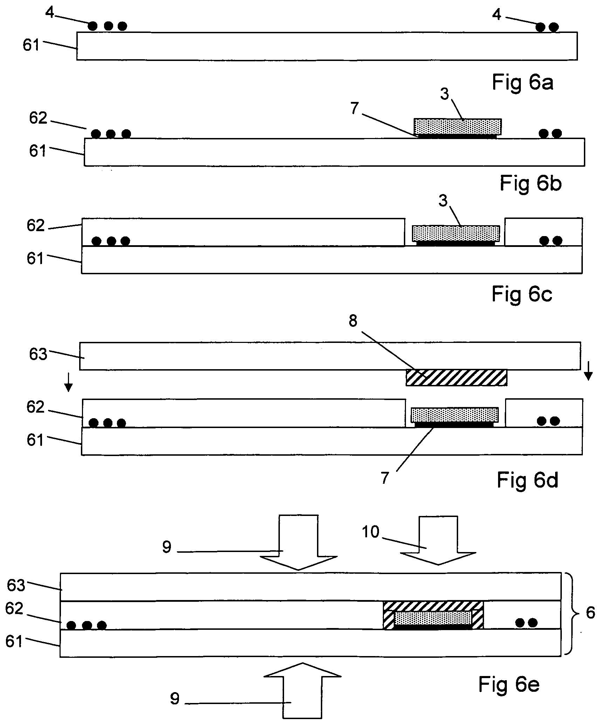

In Figur 6a bis 6e ist ein modifiziertes Herstellungsverfahren dargestellt, wobei hier nur auf die wesentlichen Unterschiede zu den Figuren 4 und 5 eingegangen wird. Im Unterschied zu Figur 4d wird in Figur 6d das Stabilisierungsmittel 8 nicht auf den Chip 3 appliziert, sondern das Stabilisierungsmittel 8 ist bereits rückseitig auf der Deckschicht 63 appliziert worden. Durch Zusammenbringen von Trägerschicht 61 und Deckschicht 63 wird das Stabilisierungsmittel 8 in den Datenträgerkörper 6 eingebracht. Das Zusammenbringen kann passergenau erfolgen. Figur 6e entspricht dann wieder der Figur 4e. Dieses Verfahren kann auch mit dem Verfahren der Figur 4 oder 5 kombiniert werden, wodurch Mehrkomponentenstabilisierungsmittel 8 eingesetzt werden können. Eine erste Komponente wird dann direkt auf den Chip 3, eine zweite Komponente rückseitig auf die Deckschicht 63 appliziert, wobei durch das Aufeinanderbringen beide Komponenten vermischt werden und entsprechend miteinander reagieren.

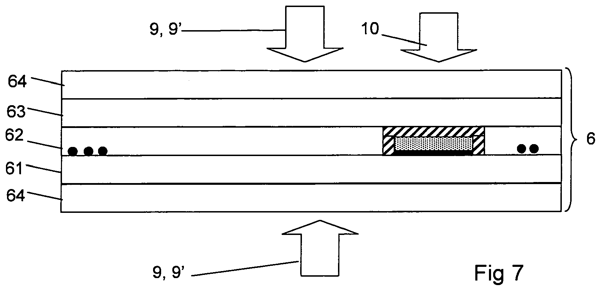

In Figur 7 ist eine Weiterbildung der Figuren 4 bis 6 gezeigt, aus der ersichtlich wird, dass die Schichtenfolge aus Trägerschicht 61, Kernschicht 62 und Deckschicht 63 als Inlay für einen Datenträger 1 vorgesehen sein können und weitere Overlayschichten 64 beidseitig auf das Inlay aufgebrachte werden können. Das Inlay kann bereits laminiert sein und die Overlayschichten 64 werden in einem weiteren Laminiervorgang 9' aufgebracht werden. Alternativ wird der resultierende Folienaufbau gemäß Schichten 64, 61, 62, 63, 64 in einem Durchgang laminiert, wobei kein separates Inlay gefertigt wird.. Nach dem ersten und ggf. zweiten Laminierprozess 9, 9' wird das Stabilisierungsmittel 8 aktiviert. Alternativ wird das Stabilisierungsmittel 8 vorher aktiviert, wobei insbesondere ein elastischer Materialzustand des Stabilisierungsmittels 8 während und nach dem Laminieren 9 erhalten bleiben muss. Die Overlayfolien 64 dienen für den Designdruck und ggf. eine optische Personalisierung des Datenträgers 1.

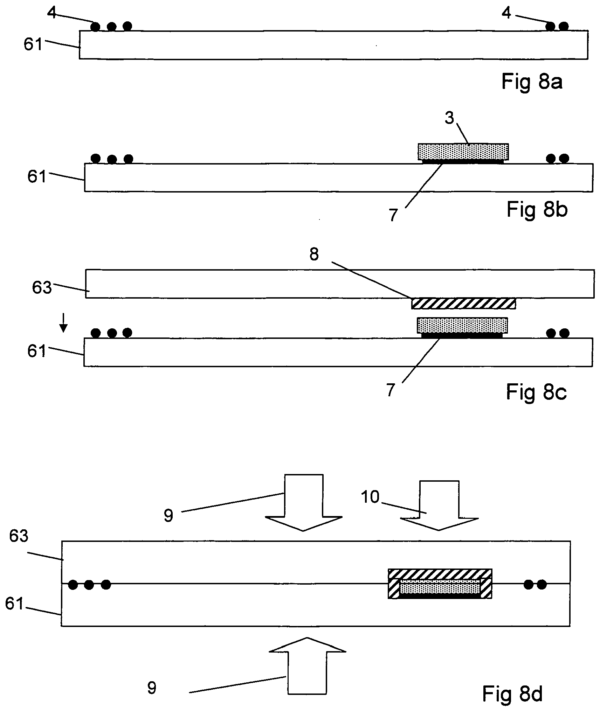

Gemäß Figur 8a wird eine Trägerschicht 61 bereitgestellt. Diese Trägerschicht 61weist bereits eine Spule 4 auf, die entweder in Form eines Spulendrucks aufgedruckt wurde, gemäß eines Aufdampfprozesses aufgebracht wurde oder als Drahtwicklung oberhalb der Trägerschicht 61 aufgebracht wurde. Oberhalb der Trägerschicht 61 auf der Seite der Spule 4 wird gemäß Figur 8b ein Chip 3 angebracht. Dazu wird ggf. bereits ein Chipkleber 7 verwendet, um den Chip im Aufbau fixieren zu können. Durch das Einbringen des Chips 3 wird eine elektrisch leitfähige Verbindung 5 zu der Spule 4 hergestellt.

Gemäß Figur 8c wird nun eine Deckschicht 63 auf die Trägerschicht 61 angeordnet. Die Schichten 61 und 63 werden vor dem Laminieren 9 bis zu einem Erweichungspunkt erwärmt, bei der Verwendung von PC als Material der Schichten 61, 63 auf ca. 150 Grad Celsius. Anschließend wird der erhaltene Schichtaufbau 61 und 63 laminiert, was durch die Pfeile 9 dargestellt ist.

Erfindungsgemäß wird mit dem Anordnen der Deckschicht 63 ein Stabilisierungsmittel 8 oberhalb des Chips 3 appliziert. Zusätzlich kann auch unterhalb des Chips 3 ein Stabilisierungsmittel 8 appliziert werden. Das Applizieren erfolgt mittels einer nicht dargestellten Dosiereinheit oder alternativ und bevorzugt in einem Siebdruckschritt. Das Stabilisierungsmittel 8 weist eine derartige Viskosität auf, sodass der Chip 3 auch an den Seitenflächen vom Stabilisierungsmittel 8 benetzt wird. Insbesondere ist das Stabilisierungsmittel 8 flexibel und härtet nicht vor dem Laminieren 9 aus.

Erst in einem Folgeschritt wird nun das Stabilisierungsmittel aktiviert, was durch den Pfeil 10 dargestellt ist. Durch die Beschaffenheit des Stabilisierungsmittels 8 wird erreicht, dass der Chip 3 ummantelt wird. Mechanischer Stress, der während des Laminierens 9 aufgebaut wird, wird von dem Stabilisierungsmittel 8 absorbiert, sodass in den Datenträgerkörper 6, insbesondere in die einzelnen Folienschichten 61, 63 keine Spannungen eingefroren werden, sodass der Datenträgerkörper 6 nach dem Laminieren keine mechanischen Spannungen aufweist.

Alternativ zum Schritt 10 vernetzt das Stabilisierungsmittel 8 beim Einbringen in die Aussparung 2 mit dem Chip und den Schichten 61 und 63. Das Stabilisierungsmittel 8 bleibt dabei auch nach dem Laminieren 10 elastisch und kompensiert die während des Laminierens 9 auftretenden mechanischen Spannungen.

Das erfindungsgemäße Stabilisierungsmittel 8 aller Figuren ist ein Material, welches flexibel ist und während des Laminierprozesses nicht bereits aushärtet, wodurch es den entstehenden mechanischen Stress absorbieren kann und Chip mit Spule nicht mechanisch gestresst werden können. Das Stabilisierungsmittel 8 verteilt sich während dem Laminieren gleichmäßig um den Chip 3 und in die Zwischenräume zwischen Aussparung 2 und Chip 3.

Als Stabilisierungsmittel können Lacke oder Dispersionshaftklebestoffe verwendet werden, die wasserbasiert sind. Diese können konventionell trocknen. Sie sind weich einstellbar und können daher gut in die Aussparung 2 appliziert werden. Alternativ basieren diese Lacke oder Dispersionshaftklebestoffe auf einem Lösungsmittel. Die Aktivierbarkeit dieses Stoffes ist in der verspäteten Aushärtung gegeben. Sobald das Mittel 8 appliziert ist, wird der Folienverbund laminiert. Die Lacke oder Haftkleber sind derart beschaffen, dass eine Aushärtung erst nach dem Laminieren erfolgt.

Alternativ wird als Stabilisierungsmittel 8 ein Mittel verwendet, welches mittels Strahlung aktivierbar ist. Beispielsweise ein mittels thermischer Strahlung verflüssigter Hotmelt wird kurz vor dem Laminieren in die Aussparung 2 eingebracht. Das Laminieren verhindert ein Aushärten des Hotmelt, wodurch entstehende mechanische Spannungen vom Hotmelt absorbiert werden können. Nach Entfernen der Laminierbleche erkaltet die Schichtenfolge, wodurch auch das Hotmelt erstarrt und für eine mechanische Stabilität sorgt. Der Hotmelt, auch Kleberschmelze genannt, kann dabei eine Vergussmasse oder ein Haftklebstoff sein.

Alternativ wird als Stabilisierungsmittel 8 ein Mittel verwendet, welches mittels UV Strahlung aktivierbar ist. Beispielsweise eine flexible UV-härtende Vergussmasse oder ein UV-härtendes Haftklebemittel wird als Stabilisierungsmittel 8 eingebracht und verbleibt während des Laminierens in diesem flexiblen Zustand. Nach dem Laminieren wird mittels eines UV-Strahlenerzeugers das UV-aktivierbare Mittel erhärtet.

Das Applizieren des Stabilisierungsmittels 8 erfolgt dabei über ein Dosiereinheit oder in einem Siebdruckverfahren.

### Bezugszeichenliste

- 1: Tragbarer Datenträger, Kontaktloschipkarte
- 2: Aussparung
- 3: Chip
- 4: Nahfeldantenne, Spule
- 5: Elektrische Verbindung zwischen Spule und Chip
5a Spulenanschlusskontakt in Trägerschicht
5b Spulenanschlusskontakt auf Chip
5c Bruch der elektrischen Verbindung
- 6: Datenträgerkörper
61 Trägerschicht
62 Kernschicht
63 Deckschicht
64 Overlayschicht
65 Mikroriss
- 7: Chipkleber
- 8: Stabilisierungsmittel
- 9: Laminierbleche
- 10: Aktivierung des Stabilisierungsmittels
- A-A': Schnittlinie durch den Datenträger

## Patentansprüche

1. Verfahren zum Herstellen eines tragbaren Datenträgers (1) mit den Verfahrensschritten:
- Bereitstellen eines Datenträgerkörpers (6) mit einer Aussparung (2) für einen Chip (3);
- Einbringen eines Chips (3) in die Aussparung (2);
- Aufbringen einer Deckschicht (63) auf den Datenträgerkörper (6);
- Laminieren des Datenträgerkörpers (6) und der Deckschicht (63); **dadurch gekennzeichnet, dass:**
der Datenträgerkörper (6) zumindest aus einer Trägerschicht (61) und einer Kernschicht (62) aufgebaut ist und die Kernschicht (62) die Aussparung (2) aufweist, in die der Chip (3) eingebracht wird,
nach dem Einbringen des Chips und vor dem Laminieren (9) ein Stabilisierungsmittel (8) in die Aussparung (2) der Kernschicht (62) appliziert wird; und
das Stabilisierungsmittel (8) drucktechnisch appliziert wird,
wobei während des Laminierens eingebrachte mechanische Spannungen zwischen Chip (3) und Datenträgerkörper (6) kompensiert werden,
indem das den Chip (3) ummantelnde Stabilisierungsmittel (8) erst nach Abschluss des Laminierens aktiviert wird,
wobei beim Aktivieren das Stabilisierungsmittel (8) aus einem flexiblen Materialzustand in einen elastischen Materialzustand gebracht wird,
so dass sich das Stabilisierungsmittel (8) vor und während des Laminierens flexibel verteilt und der Chip (3) flexibel im Datenträgerkörper integriert wird,
wobei das Stabilisierungsmittel (8) eine Viskosität aufweist, die es ermöglicht, es um den Chip (3) herum zu applizieren.

2. Verfahren nach Anspruch 1, wobei das Stabilisierungsmittel (8) auf der Deckschicht (63) angeordnet ist und während des Aufbringens der Deckschicht (63) auf die Kernschicht (62) in die Aussparung (2) appliziert wird.

3. Verfahren nach einem der vorhergehenden Ansprüche, wobei auf die Trägerschicht (61) eine Spule (4) aufgebracht wurde und diese Spule (4) beim Schritt des Aufbringens des Chips (3) auf die Trägerschicht (61) elektrisch leitend mit dem Chip (3) verbunden wird.

4. Verfahren nach einem der vorhergehenden Ansprüche, wobei auf der Trägerschicht (61) vor dem Aufbringen des Chips (3) ein Chipkleber (7) aufdosiert wird.

5. Verfahren nach einem der vorhergehenden Ansprüche, wobei die Trägerschicht (61), die Kernschicht (62) und die Deckschicht (63) ein Inlay für einen Datenträger (1) bilden und weitere Overlayschichten (64) aufgebracht werden.

6. Verfahren nach einem der vorhergehenden Ansprüche, wobei das Stabilisierungsmittel (8) durch eine Strahlung (10) aktivierbar ist.

7. Verfahren nach einem der vorhergehenden Ansprüche, wobei das Stabilisierungsmittel (8) ein wasserbasierter oder lösungsmittelbasierter Lack ist.

8. Verfahren nach einem der vorhergehenden Ansprüche, wobei das Stabilisierungsmittel (8) ein wasserbasierter oder lösungsmittelbasierter Haftkleber ist.

## Claims

1. A method for manufacturing a portable data carrier (1) with the method steps of:
- making available a data carrier body (6) with a recess (2) for a chip (3);
- introducing a chip (3) into the recess (2);
- applying a cover layer (63) to the data carrier body (6);
- laminating the data carrier body (6) and the cover layer (63);
**characterized in that:**
the data carrier body (6) is constructed from at least one carrier layer (61) and a core layer (62) and the core layer (62) has the recess (2) into which the chip (3) is introduced,
after introducing the chip and prior to laminating (9), a stabilizing means (8) is administered into the recess (2) of the core layer (62); and
the stabilizing means (8) is administered by printing technology,
wherein mechanical tensions between the chip (3) and the data carrier body (6) introduced during lamination are compensated,
by the stabilizing means (8) surrounding the chip (3) being activated only after conclusion of the lamination,
wherein upon activation, the stabilizing means (8) is brought from a flexible material state into an elastic material state,
so that the stabilizing means (8) is distributed flexibly before and during lamination and the chip (3) is integrated flexibly in the data carrier body,
wherein the stabilizing means (8) has a viscosity which enables it to be applied around the chip (3).

2. The method according to claim 1, wherein the stabilizing means (8) is arranged on the cover layer (63) and is administered to the core layer (62) into the recess (2) during application of the cover layer (63).

3. The method according to any one of the preceding claims, wherein a coil (4) was applied to the carrier layer (61) and said coil (4) is connected electroconductively to the chip (3) during the step of applying the chip (3) to the carrier layer (61).

4. The method according to any one of the preceding claims, wherein a chip adhesive (7) is dispensed onto the carrier layer (61) prior to applying the chip (3).

5. The method according to any one of the preceding claims, wherein the carrier layer (61), the core layer (62) and the cover layer (63) form an inlay for a data carrier (1) and further overlay layers (64) are applied.

6. The method according to any one of the preceding claims, wherein the stabilizing means (8) is activatable by a radiation (10).

7. The method according to any one of the preceding claims, wherein the stabilizing means (8) is a water-based or solvent-based lacquer.

8. The method according to any one of the preceding claims, wherein the stabilizing means (8) is a water-based or solvent-based contact adhesive.

## Revendications

1. Procédé de fabrication d'un support de données (1) portable, comprenant les étapes :
- mise à disposition d'un corps de support de données (6) comportant un évidement (2) destiné à une puce (3) ;
- insertion d'une puce (3) dans l'évidement (2) ;
- placement d'une couche de recouvrement (63) sur le corps de support de données (6) ;
- laminage du corps de support de données (6) et de la couche de recouvrement (63) ;
**caractérisé en ce que :**
le corps de support de données (6) est composé au moins d'une couche support (61) et d'une couche noyau (62), et que la couche noyau (62) comporte l'évidement (2) dans lequel la puce (3) est insérée,
après l'insertion de la puce et avant le laminage (9), un agent stabilisant (8) est placé dans l'évidement (2) de la couche noyau (62) ; et
l'agent stabilisant (8) est appliqué par impression,
cependant que des tensions mécaniques introduites pendant le laminage entre la puce (3) et le corps de support de données (6) sont compensées,
ce qui a lieu **en ce que** l'agent stabilisant (8) enrobant la puce (3) n'est activé qu'après l'achèvement du laminage,
cependant que, lors de l'activation, l'agent stabilisant (8) est porté d'un état flexible de matériau à un état élastique de matériau,
de telle sorte que l'agent stabilisant (8) se répartit de façon flexible avant et pendant le laminage, et que la puce (3) est intégrée de façon flexible dans le corps de support de données,
cependant que l'agent stabilisant (8) présente une viscosité qui permet qu'il soit appliqué autour de la puce (3).

2. Procédé selon la revendication 1, cependant que l'agent stabilisant (8) est agencé sur la couche de recouvrement (63) et est, pendant le placement de la couche de recouvrement (63) sur la couche noyau (62), appliqué dans l'évidement (2).

3. Procédé selon une des revendications précédentes, cependant que, sur la couche support (61), une bobine (4) a été placée, et que cette bobine (4) est, lors de l'étape du placement de la puce (3) sur la couche support (61), reliée de manière électroconductrice à la puce (3).

4. Procédé selon une des revendications précédentes, cependant que, sur la couche support (61), avant le placement de la puce (3), une colle à puce (7) est appliquée par dosage.

5. Procédé selon une des revendications précédentes, cependant que la couche support (61), la couche noyau (62) et la couche de recouvrement (63) constituent un intercalaire pour un support de données (1), et que d'autres couches de superposition (64) sont placées.

6. Procédé selon une des revendications précédentes, cependant que l'agent stabilisant (8) est activable par un rayonnement (10).

7. Procédé selon une des revendications précédentes, cependant que l'agent stabilisant (8) est un vernis à base d'eau ou à base de solvant.

8. Procédé selon une des revendications précédentes, cependant que l'agent stabilisant (8) est un adhésif à base d'eau ou à base de solvant.
